# EUROPÄISCHE PATENTSCHRIFT

(11) **EP 3 995 799 B1**
(45) Veröffentlichungstag und Bekanntmachung des Hinweises auf die Patenterteilung: **31.05.2023**
(21) Anmeldenummer: 21204285.7
(22) Anmeldetag: 22.10.2021
(51) Int. Cl.: G01K 1/14, A47J 37/07

(54) **SYSTEM MIT HALTERUNG UND EINSTECH-SPEISENTHERMOMETER SOWIE HALTERUNG**
SYSTEM WITH STAND AND PENETRATION FOOD THERMOMETER AS WELL AS STAND
SYSTÈME COMPRENANT UN SUPPORT ET UN THERMOMÈTRE POUR ALIMENTS DE PÉNÉTRATION, AINSI QU'UN SUPPORT

(30) Priorität: 09.11.2020 DE 102020214049
(43) Veröffentlichungstag der Anmeldung: 11.05.2022
(60) Teilanmeldung: 23150596.7
(73) Patentinhaber: Vorwerk & Co. Interholding GmbH, 42270 Wuppertal (DE)
(72) Erfinder: Seydel, Leon, 42115 Wuppertal (DE); Thies, Felix, 42115 Wuppertal (DE); Stein, Matthias, 45472 Mühlheim (DE); Buggeln, Christoph, 40219 Düsseldorf (DE); Charopoulos, Philipp, 40878 Ratingen (DE)
(74) Vertreter: Gille Hrabal Partnerschaftsgesellschaft mbB Patentanwälte

(56) Entgegenhaltungen:
- FR-A1- 3 090 310

## Beschreibung

Die Erfindung betrifft ein System aus Halterung und Speisenthermometer.

Ein Speisenthermometer ist ein Thermometer, mit dem die Temperatur einer Speise gemessen werden soll. Ein in eine Speise einstechbares Speisenthermometer ist dafür bestimmt und geeignet, in eine Speise hineingestochen zu werden, um die Temperatur innerhalb der Speise messen zu können. Ein solches Thermometer weist daher eine Spitze auf, um beispielsweise in Fleisch hineingestochen werden zu können. Ein temperaturempfindlicher Sensor des Speisenthermometers befindet sich dann bei der Spitze, um die Innentemperatur von Fleisch messen zu können. Beispiele von solchen Speisenthermometern sind aus den Druckschriften EP 0687866A1, US 6,568,848 B1 und US 7,075,442 B2 bekannt.

Wird ein Speisenthermometer in Fleisch hineingestochen, so kann das Fleisch das Thermometer halten. Ein Halten des Speisenthermometers durch eine Speise ist allerdings nicht möglich, wenn die Konsistenz der Speise nicht hinreichend fest ist. Es besteht daher Bedarf für eine Halterung, die ein Speisenthermometer in einer gewünschten Position halten kann.

Ein magnetisches Halten eines Speisenthermometers ist aus den Druckschriften US 2017/138797 A1 und US 2017/138798 A1 bekannt. Die Druckschriften EP 2 896 330 A1 und EP 2 896 329 A1 offenbaren einen Adapter für ein Befestigen eines Speisenthermometers an einem Gargeschirr. Das Speisenthermometer muss dann nicht durch eine Speise in einer gewünschten Position gehalten werden. Ein Speisenthermometer mit einer Halterung ist aus der Druckschrift FR 3 090 310 A1 bekannt.

Es ist Aufgabe der Erfindung, ein vielseitiges System aus Halterung und Speisenthermometer zu schaffen.

Zur Lösung der Aufgabe dient ein System mit einem Speisenthermometer und einer Halterung für ein Halten des Speisenthermometers mit den Merkmalen des ersten Anspruchs.

Die Halterung umfasst zwei verschiedene Halteeinrichtungen, durch die das Speisenthermometer in zwei verschiedenen Haltepositionen gehalten werden kann. Das System ist vielseitig, weil zwei verschiedene Haltepositionen möglich sind.

Das Speisenthermometer kann in eine Halteeinrichtung beispielsweise eingesetzt werden, um von der Halteeinrichtung gehalten zu werden. Umfasst die Halterung zwei verschiedene Halteeinrichtungen, so kann das Thermometer auf wenigstens zwei verschiedene Weisen gehalten werden. Es gibt damit wenigstens zwei verschiedene Haltepositionen für das Thermometer.

Die zwei Halteeinrichtungen können das Thermometer unterschiedlich gewinkelt halten. Hierdurch kann es möglich sein, das Thermometer aus unterschiedlicher Richtung in einer Speise hineinstecken zu können, während es von der Halterung gehalten wird. Die Lage der Halterung muss dafür dann nicht geändert werden. Hierdurch kann es möglich sein, dass das Thermometer beispielsweise unterschiedlich geneigt von den zwei Halteeinrichtungen der Halterung gehalten werden kann. Durch die zwei Halteeinrichtungen können dann also zwei unterschiedlich geneigte Positionen für das Thermometer ausgewählt werden.

Das Thermometer kann beispielsweise in unterschiedlicher Höhe von den zwei Halteeinrichtungen der Halterung gehalten werden. Durch die zwei Halteeinrichtungen können dann also zwei unterschiedliche Höhen ausgewählt werden. Es ist dadurch möglich, dass das Speisenthermometer in eine Speise in unterschiedlicher Höhe hineingesteckt sein kann, wenn dieses von der Halterung gehalten wird.

Durch die Halterung kann das Thermometer in einer gewünschten Position gehalten werden, um zuverlässig beispielsweise das Innere einer Speise mithilfe einer hineingesteckten Spitze des Speisenthermometers messen zu können. Es kann durch die Halterung auch erreicht werden, dass sich ein zweiter Temperatursensor des Speisenthermometers zuverlässig außerhalb der Speise befindet, um nicht nur die Temperatur der Speise unmittelbar messen zu können, sondern zeitgleich auch die Temperatur in einem Speisenzubereitungsgefäß, in dem sich die Speise befindet. Ein erster Temperatursensor des Thermometers befindet sich dann beispielsweise bei einem Ende des Thermometers und ein zweiter Temperatursensor kann sich dann in der Mitte des Thermometers befinden oder bei einem anderen Ende des Thermometers.

Eine Halteeinrichtung kann ein Durchgang sein, durch das ein Ende des Speisenthermometers für ein Halten hindurchgesteckt werden kann. Vorzugsweise kann nur ein Ende des Speisenthermometers hindurchgesteckt werden. Beispielsweise der Durchmesser des anderen Endes Speisenthermometers kann so groß sein, um hindurchgesteckt werden zu können. Ein Durchgang kann mit geringem technischen Aufwand realisiert werden. Aufgrund seiner einfachen Geometrie kann ein Durchgang leicht beispielsweise mithilfe einer Spülmaschine gereinigt werden. Ein Durchgang vervielfältigt darüber hinaus die Zahl der möglichen Halterpositionen, da das Thermometer unterschiedlich weit in einen Durchgang hineingesteckt werden kann. Die Auswahlmöglichkeiten für ein Positionieren des Thermometers werden vorteilhaft dadurch weiter erhöht. Es können so weiter verbessert geeignete Temperaturen gemessen werden.

Der Durchmesser eines Durchgangs kann so gewählt sein, dass es zwischen dem Thermometer und dem Durchgang eine Spielpassung gibt, wenn das Thermometer durch den Durchgang gehalten wird. Ein Ende des Thermometers kann dann sehr leicht durch den Durchgang hindurchgesteckt werden.

Der Durchmesser eines Durchgangs kann so gewählt sein, dass es zwischen dem Thermometer und dem Durchgang eine Übergangspassung gibt, wenn das Thermometer durch den Durchgang gehalten wird. Ein besonders zuverlässiges Halten ist dann möglich. Allerdings ist ein etwas höherer Kraftaufwand in der Regel erforderlich, um ein Ende des Thermometers durch den Durchgang hindurch zu stecken.

Der Durchmesser eines Durchgangs ist grundsätzlich nicht größer als 20 mm, vorzugsweise nicht größer als 10 mm. Der Durchmesser eines Durchgangs beträgt grundsätzlich wenigstens 3 mm, vorzugsweise wenigstens 5 mm.

Die Oberfläche des Durchgangs kann aus einem rutschfesten Material bestehen wie zum Beispiel einem Elastomer, um das Thermometer besonders zuverlässig halten zu können.

Die Halterung umfasst in einer Ausgestaltung einen Fuß für ein Aufstellen der Halterung auf einem Untergrund. Der Fuß kann an seiner Unterseite eine ebene Fläche aufweisen, um diesen auf einem Untergrund abstellen zu können. Der Fuß kann an seiner Unterseite beispielsweise Noppen aufweisen, um diesen auf einem Untergrund abstellen zu können. Durch den Fuß kann die Halterung standfest auf einem waagerechten Untergrund aufgestellt werden.

In einer Ausgestaltung kann eine Halteeinrichtung das Speisenthermometer senkrecht oder zumindest im Wesentlichen senkrecht halten, wenn die Halterung durch den Fuß auf einem waagerechten Untergrund aufgestellt ist. Ein Thermometer kann daher platzsparend sowie griffbereit mittels der Halterung bereitgehalten werden.

In einer Ausgestaltung kann eine Halteeinrichtung das Speisenthermometer waagerecht oder zumindest im Wesentlichen waagerecht halten, wenn der Fuß auf einem waagerechten Untergrund steht. Diese Position dient vor allem dazu, ein Thermometer seitlich in eine Speise hineinstecken zu können. Gleichzeitig kann dann die Halterung das Speisenthermometer halten. Die Position des Thermometers muss daher dann nicht durch die Speise gehalten werden. Dies gilt auch dann, wenn die Halteeinrichtung durch einen Durchgang gebildet ist.

In einer Ausgestaltung kann das Speisenthermometer mit einer Waagerechten einen Winkel von weniger als 20°, vorzugsweise von weniger als 15°, besonders bevorzugt von weniger als 10°, einschließen, wenn das Speisenthermometer durch die Halteeinrichtung im Wesentlichen waagerecht gehalten wird. Im Wesentlichen waagerecht meint, dass das Speisenthermometer leicht geneigt ist, also mit der Waagerechten einen Winkel größer als Null einschließt.

In einer Ausgestaltung sind die Länge und/oder die Breite des Fußes größer als die Höhe der Halterung. Hierdurch wird ein tiefer Schwerpunkt der Halterung erzielt. Dadurch kann die Halterung besonders stabil auf ihrem Fuß aufgestellt werden. Außerdem kann die Halterung platzsparend untergebracht werden.

Länge und/oder Breite des Fußes betragen grundsätzlich nicht mehr als 100 mm, vorzugsweise nicht mehr als 80 mm. Die Höhe der Halterung beträgt dann grundsätzlich weniger als 100 mm, vorzugsweise weniger als 80 mm. Länge und/oder Breite des Fußes betragen vorzugsweise wenigstens 20 mm, besonders bevorzugt wenigstens 30 mm.

In einer Ausgestaltung umfasst der Fuß eine seitlich gerade verlaufende Seite. Die gerade verlaufende Seite kann eine gerade laufende Kante umfassen. Die gerade verlaufende Seite kann in Querrichtung gerundet sein. Die gerade verlaufende Seite ist so, dass diese mit einer Geraden auf einer Ebene abgestellt sein kann. Hierdurch kann erreicht werden, dass das Thermometer in eine Speise hineingesteckt wird und mithilfe der gerade verlaufenden Seite auf einem Untergrund abgestützt wird. Die Position eines Thermometers kann also durch die gerade verlaufende Seite stabilisiert werden.

In einer Ausgestaltung umfasst der Fuß seitlich eine zum Beispiel ebene Stützfläche und dann auch eine gerade verlaufende Seite. Die Stützfläche ist dann so, dass diese vollflächig auf einer Ebene abgestellt sein kann. Hierdurch kann erreicht werden, dass das Thermometer in eine Speise hineingesteckt wird und mithilfe der Stützfläche gegenüber einem Untergrund abgestützt wird. Die Position eines Thermometers kann also durch die Stützfläche stabilisiert werden.

Die Stützfläche muss aber nicht geradlinig verlaufen und/oder eben sein. Wichtig ist, dass die Stützfläche an wenigstens zwei verschiedenen Stellen so auf einem Untergrund aufliegen kann, dass die Halterung gegen ein Verkippen gesichert ist. Dies kann beispielsweise durch einen konkaven Verlauf der Stützfläche erreicht werden. Die zwei verschiedenen Stellen weisen also einen Abstand auf. Der Abstand sollte wenigstens 1 cm betragen. Kann die Stützfläche nicht ein Verkippen verhindern, dann liegt keine Stützfläche im Sinne der Erfindung vor.

In einer Ausgestaltung umfasst die Halterung eine weitere Halteeinrichtung, mit der die Halterung an einer Wand eines Speisengefäßes befestigt werden kann. Die Halterung kann dann also an einer Gefäßwand angebracht werden. Die Halterung kann bei dieser Ausgestaltung das Thermometer so halten, dass dieses in das zugehörige Gefäß hineinreicht, um zumindest die Innentemperatur des Gefäßes messen zu können.

Die weitere Halteeinrichtung kann einen Schlitz mit einem offenen Ende umfassen. Ein Rand einer Gefäßwand kann in den Schlitz hineingesteckt werden, damit auf diese Weise die Halterung an dem Gefäß befestigt wird. Die Befestigung kann beispielsweise durch eine Klemmwirkung erzielt werden, wenn der Schlitz elastisch auseinandergedrückt werden kann. Dies ist beispielsweise dann der Fall, wenn die weitere Halteeinrichtung aus einem elastomeren Material besteht. Vorzugsweise besteht dann die Halterung vollständig aus einem elastomeren Material. Hierdurch kann der Fertigungsaufwand geringgehalten werden.

Der Schlitz ist vorzugsweise an dem Ende verbreitert, das dem offenen Ende gegenüberliegt. Ein Auseinanderbiegen des Schlitzes wird dadurch erleichtert, damit der Schlitz durch Klemmwirkung an einer Gefäßwand befestigt werden kann. Außerdem kann so verbessert vermieden werden, dass die weitere Halteeinrichtung durch ein Auseinanderbiegen des Schlitzes beschädigt wird. Die Verbreiterung kann kreisförmig sein.

Schlitz und Verbreiterung können L-förmig sein, um einen an den Schlitz angrenzenden Schenkel in dem Bereich der Verbreiterung zu verjüngen. Ein Auseinanderbiegen des Schlitzes durch Biegen von im Wesentlichen nur einem Schenkel kann dadurch erreicht werden. Wird im Wesentlichen aufgrund einer L-Form nur ein Schenkel für ein Befestigen gebogen, so kann der andere Schenkel positionsstabil an einer Innenwand eines Gefäßes anliegen. Damit kann das Thermometer besonders reproduzierbar in das Innere eines Gefäßes hineinreichen.

Vorzugsweise umfasst der für ein Aufstellen der Halterung vorgesehene Fuß den Schlitz. Dies ist insbesondere dann von Vorteil, wenn die Dimensionen des Fußes vergleichsweise groß im Vergleich zur Höhe der Halterung sind. Durch den Fuß wird genügend Raum bereitgestellt, um einen hinreichend großen Schlitz vorsehen zu können.

In einer Ausgestaltung schließt das Speisenthermometer mit einer Wand eines Speisengefäßes einen Winkel von 20° bis 70°, vorzugsweise von 30° bis 60° ein, wenn die Halterung durch die weitere Halteeinrichtung an der Wand des Speisengefäßes befestigt ist und das Thermometer durch eine Halteeinrichtung gehalten wird. Durch einen solchen Winkel kann das Speisenthermometer geeignet weit in das Speisengefäßes hineinreichen und kann dann auch einen hinreichenden Abstand zur Wand des Speisengefäßes aufweisen. Auf diese Weise wird sichergestellt, dass eine Innentemperatur des Speisengefäßes gemessen werden kann und nicht etwa eine Temperatur bei einem möglicherweise kühleren Wandbereich.

Die Halterung kann wie zuvor beschrieben beschaffen sein. Die Halterung kann einen Fuß für ein Aufstellen der Halterung. Die Halterung kann zwei Durchgänge als Halteeinrichtungen für ein Halten des Speisenthermometers umfassen. Die Halterung kann einem Schlitz als weitere Halteeinrichtung umfassen. Der Schlitz kann ein offenes Ende umfassen, damit eine Gefäßwand in den Schlitz hineingeschoben werden kann, um so die Halterung an einer Wand eines Speisengefäßes zu befestigen.

Die Halterung ist vorzugsweise einstückig gefertigt. Hierdurch wird vor allem erreicht, dass der Reinigungsaufwand geringgehalten werden kann. Die Halterung kann aus einem Kunststoff bestehen, der wenigstens bis zu 100°C, vorzugsweise wenigstens bis zu 180°C hitzebeständig ist. Das Material, aus dem die Halterung besteht, ist vorzugsweise wenigstens bis zu 250 °C hitzebeständig.

Das Speisenthermometer und die Halterung sind grundsätzlich getrennte Bauteile. Um ein vielseitiges System bereitzustellen, sind keine zwei verschiedenen Haltepositionen notwendig. Beispielsweise eine Kombination aus nur einer Halteeinrichtung und Fuß der Halterung ermöglichen Vielseitigkeit. Die Aufgabe der Erfindung kann also auch durch eine Halterung gelöst werden, die nur eine Halteeinrichtung für das Thermometer umfasst. Dieses Ausführungsbeispiel ist jedoch kein Teil der beanspruchten Erfindung.

Die Halterung kann in einer Ausgestaltung auch mehr als zwei verschiedene Halteeinrichtungen für das Thermometer umfassen. Die Halterung kann also beispielsweise drei Halteeinrichtungen für das Thermometer umfassen. Das Speisenthermometer kann dann beispielsweise in wenigstens drei verschiedenen Haltepositionen gehalten werden. Es können also beispielsweise drei verschiedene Durchgänge vorhanden sein, die die drei Halteeinrichtungen bilden. Durch jedes der drei Durchgänge kann dann zumindest ein Ende des Thermometers hindurchgesteckt werden.

Die Halterung kann aber auch vier verschiedene Halteeinrichtungen für das Thermometer umfassen. Es können also beispielsweise vier verschiedene Durchgänge für das Thermometer vorhanden sein.

Sind wenigstens zwei Halteeinrichtungen für das Thermometer vorhanden, so kann es zweckmäßig sein, dass eine erste Halteeinrichtung durch einen Durchgang realisiert ist und eine zweite Halteeinrichtung durch eine Klammer, um zu einem besonders vielseitigen System zu gelangen. Die Klammer kann vorgesehen sein, um das Thermometer auch in einer schräg gestellten Position sicher halten zu können. Die Bohrung kann dann für ein zumindest näherungsweise waagerechtes Halten des Thermometers vorgesehen sein.

Grundsätzlich kann das Thermometer in beide Eingangsöffnungen eines Durchgangs hineingesteckt und anschließend durch den Durchgang hindurchgesteckt werden. Es sind damit pro Durchgang bereits deshalb zwei verschiedene Haltepositionen möglich. Da das Ende des Thermometers grundsätzlich unterschiedlich weit durch einen jeden Durchgang hindurchgeschoben werden kann, vervielfältigt sich die Zahl der möglichen Haltepositionen dadurch weiter. Hieraus folgt auch, dass die Halterung nur einen Durchgang als Halteeinrichtung aufweisen kann, um dadurch ein vielseitiges System aus Halterung und Thermometer zu schaffen. Auch eine Klammer als Halteeinrichtung ermöglicht viele verschiedene Haltepositionen und damit ein vielseitiges System.

In einer Ausgestaltung kann das Thermometer durch einen Durchgang kraftschlüssig bzw. reibschlüssig gehalten werden. Dies kann erreicht werden, indem das Thermometer eine Verbreiterung so aufweist, dass der verbreiterte Bereich kraftschlüssig bzw. reibschlüssig gehalten werden kann, wenn der verbreiterte Bereich zumindest teilweise in einen Durchgang hineinbewegt worden ist. Der verbreiterte Bereich kann ein Ende des Thermometers sein. Der verbreiterte Bereich kann beispielsweise konusförmig verlaufen.

Auch andere Kombinationen der vorgenannten Merkmale sind möglich, um die angestrebte Vielseitigkeit zu erreichen. Die vorgenannten Haltereinrichtungen können auch auf andere Weise realisiert sein. Als Halteeinrichtung kann ein Magnet vorgesehen sein. Eine Halteeinrichtung kann einen Magnet umfassen. Eine für ein Halten des Thermometers vorgesehene Halteeinrichtung kann eine Klammer sein. Eine Halteeinrichtung kann aus zwei Schalen bestehen, die klappbar miteinander verbunden sind. Für ein Halten des Thermometers können die Schalen zugeklappt werden. Im zugeklappten Zustand können die Schalen beispielsweise verrastet werden, um ein Thermometer besonders stabil halten zu können.

Es zeigen
- Figur 1:: Schnitt durch ein System mit einem Speisenthermometer und einer Halterung;
- Figur 2:: gegenüber der Figur 1 um 90° verdrehte Ansicht des Systems;
- Figur 3:: System mit in eine Speise von oben eingestecktem Thermometer;
- Figur 4:: gegenüber der Figur 1 um ca. 70° verdrehte Ansicht des Systems;
- Figur 5:: System mit in eine Speise seitlich eingestecktem Thermometer;
- Figur 6:: Aufsicht auf Halterung;
- Figur 7:: Aufsicht auf Halterung mit Thermometer und Befestigung an Gefäßwand;
- Figur 8:: dreidimensionale Darstellung einer zweiten Ausführungsform;
- Figur 9:: schematische seitliche Ansicht auf eine dritte Ausführungsform;
- Figur 10:: Halterung aus Figur 9 mit stehendem Thermometer;
- Figur 11:: System mit als Griff dienender Halterung;
- Figur 12:: System mit an Gefäßwand befestigter Halterung;
- Figur 13:: System mit in eine Speise seitlich eingestecktem Thermometer;
- Figur 14:: Aufsicht auf Halterung aus Figur 13;
- Figur 15:: System mit in eine Speise seitlich eingestecktem Thermometer;
- Figur 16:: System mit zylinderförmigem Behälter.

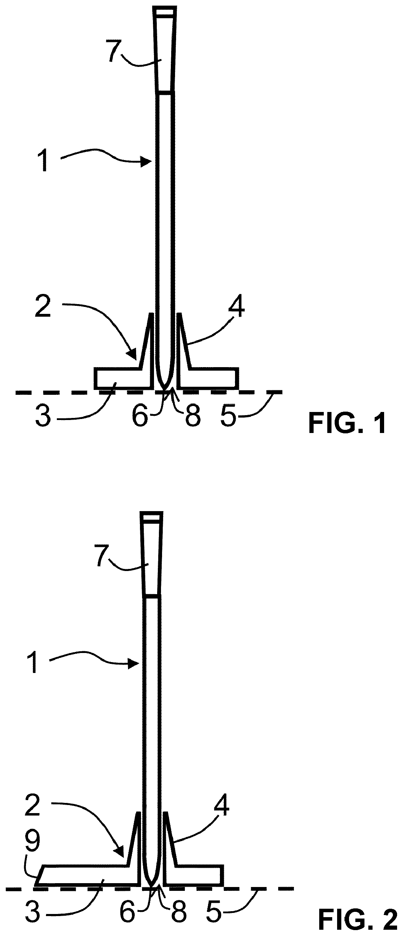

Die Figur 1 zeigt ein einen Schnitt durch ein System mit einem Speisenthermometer 1 und einer Halterung 2 für ein Halten des Speisenthermometers 1. Die beispielsweise aus einem Elastomer bestehende Halterung 2 kann einen Fuß 3 und einen Hals 4 umfassen. Steht der Fuß 3 auf einem waagerechten Untergrund 5, dann steht der Hals 4 nach oben von dem Fuß 3 ab.

Das Speisenthermometer 1 kann stiftartig sein. Das Speisenthermometer 1 kann an einem Ende eine Spitze 6 aufweisen. Das Speisenthermometer 1 kann am anderen Ende einen Griff 7 aufweisen. Der Griff 7 kann konisch verlaufen und zum Ende hin breiter werden. Das Gehäuse des Speisenthermometers 1 kann mit Ausnahme des Griffs 7 aus Metall bestehen. Das Gehäuse des Speisenthermometers 1 kann aber auch vollständig aus Metall bestehen. Der Griff 7 besteht vorzugsweise aus einem hitzebeständigen Kunststoff. Das Speisenthermometer 1 kann eine Spitze aufweisen, die in eine Speise hineingestochen werden kann. Ein Temperatursensor kann sich bei der Spitze 6 des Speisenthermometers befinden. Eine Batterie kann sich bei der Spitze des Speisenthermometers befinden. Ist die Spitze des Speisenthermometers in eine Speise hineingesteckt, so ist die Batterie gut vor Hitze geschützt, da das Innere einer Speise grundsätzlich kühler ist als die Temperatur im Innenraum eines zugehörigen Speisenzubereitungsgefäßes ist. Eine Batterie kann aber auch durch den Griff 7 vor Hitze geschützt sein und sich dann also innerhalb des Griffes 7 befinden. Die Batterie kann aufladbar sein. Ein weiterer Temperatursensor kann sich ungefähr in der Mitte des Speisenthermometers 1 befinden oder beim Griff 7, damit eine zweite Temperatur außerhalb einer Speise gemessen werden kann. Das Speisenthermometer kann über eine Elektronik verfügen, mit der ein Signal von einem Temperatursensor ausgewertet werden kann. Das Speisenthermometer kann eine Sendeeinrichtung umfassen, mit der ein Temperatursignal drahtlos an ein Empfangsgerät gesendet werden kann.

Die Spitze 6 kann ein in einen Durchgang 8 der Halterung 2 hineingestecktes Ende sein. Die Spitze 6 kann auf dem Untergrund 5 aufstehen. In dem in der Figur 1 gezeigten aufgestellten Zustand der Halterung 2 steht das Thermometer 1 senkrecht vom waagerechten Untergrund 5 ab. Das Thermometer nebst Halterung kann so platzsparend bereitgehalten werden. Der Durchgang 8 ist eine Halteeinrichtung der Halterung 2, um das Speisenthermometer 1 in einer gewünschten Position halten zu können. Die Spitze 6 kann daher auch durch den Durchgang 8 hindurch gesteckt werden.

Die Figur 1 zeigt, dass in der gezeigten Ansicht die Breite des Fußes 3 größer als die Höhe der Halterung 2 sein kann. Vom Hals 4 aus gesehen kann der Fuß 3 nach links und nach rechts gleich weit abstehen. In dieser Ansicht führt der Durchgang 8 also durch die Mitte des Fußes 3 hindurch. Der Durchmesser des Durchgangs 8 kann so sein, dass der Griff 7 nicht oder nicht vollständig durch den Durchgang 8 hindurchgeschoben werden kann. Insbesondere bei dieser Ausgestaltung kann die Halterung auch dazu genutzt werden, um ein Thermometer leicht wieder aus einer Speise herausziehen zu können. Die Halterung besteht daher vorzugsweise aus einem im Vergleich zu Metall schlecht wärmeleitendem Material wie zum Beispiel einem Elastomer oder einem anderen Kunststoff.

Die Figur 2 zeigt eine Ansicht des Systems, die gegenüber der Figur 1 um 90° um eine senkrechte Achse verdreht ist. Der Durchgang 8 führt in dieser Ansicht nicht mehr durch die Mitte des Fußes 3 hindurch. Stattdessen steht der Fuß 3 auf der linken Seite deutlich weiter vom Hals 4 seitlich ab im Vergleich zu der rechten Seite des Fußes 3. Die weiter seitlich abstehende Seite des Fußes 3 kann eine geneigte, ebene Stützfläche 9 umfassen. Der Fuß 3 kann also zu einer Seite hin seitlich weiter abstehen als zur gegenüberliegenden Seite.

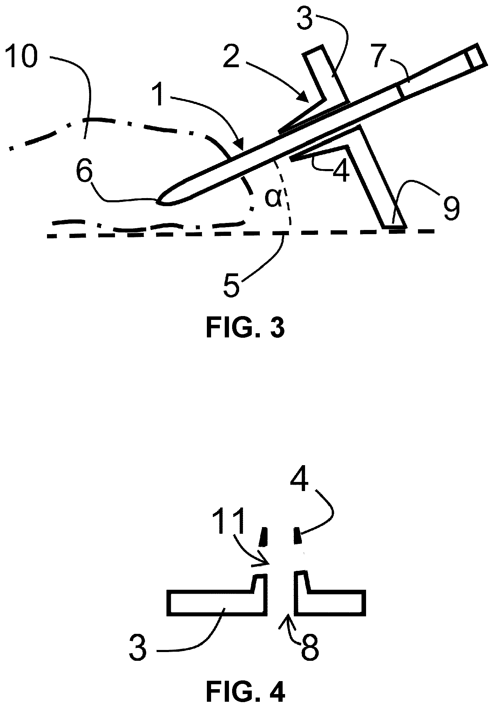

In der Figur 3 wird die Funktion der Stützfläche 9 gezeigt. Die Spitze 6 ist im Vergleich zu den Figuren 1 und 2 in umgekehrter Richtung durch den Durchgang 8 hindurchgesteckt und zwar in einen Brotteig 10 hinein. Die Stützfläche 9 steht nun auf dem Untergrund 5 auf und stabilisiert dadurch die Position des Thermometers 1. Die Stützfläche kann so geneigt sein, dass das Thermometer 1 mit dem Untergrund 5 einen Winkel α einschließt, der 30° - 60° betragen kann. Die Stützfläche 9 kann dann vollflächig an dem Untergrund 5 anliegen. Weil der Fuß 3 vom Hals 4 aus gesehen in Richtung Stützfläche 9 relativ weit absteht, kann das Thermometer 1 von einer oberen Position in eine Speise, wie zum Beispiel einen Brotteig 10, hineingesteckt werden. Anfänglich ist ein Brotteig 10 nicht fest genug, um ein Thermometer 1 zuverlässig halten zu können. Wie in der Figur 3 gezeigt, kann die Halterung 2 mit Hilfe der Stützfläche 9 die Position eines Thermometers 1 auch in solchen Speisen wie Brotteig 10 hinreichend stabilisieren.

Die Figur 4 zeigt eine Ansicht der Halterung 2, die gegenüber der Figur 1 um ca. 70° um die zuvor genannte senkrechte Achse verdreht ist. Der Durchgang 8 führt in dieser Ansicht nicht durch die Mitte des Fußes 3 hindurch. Der Fuß 3 steht zur linken Seite hin jedoch weniger seitlich ab im Vergleich zum Fall der Figur 2. Auch ist nun die geneigte, ebene Stützfläche 9 nicht mehr sichtbar. Stattdessen ist nun ein Durchgang 11 sichtbar, der ausschließlich durch den Hals 4 hindurch verläuft, durch den das Thermometer 1 hindurchgesteckt werden kann.

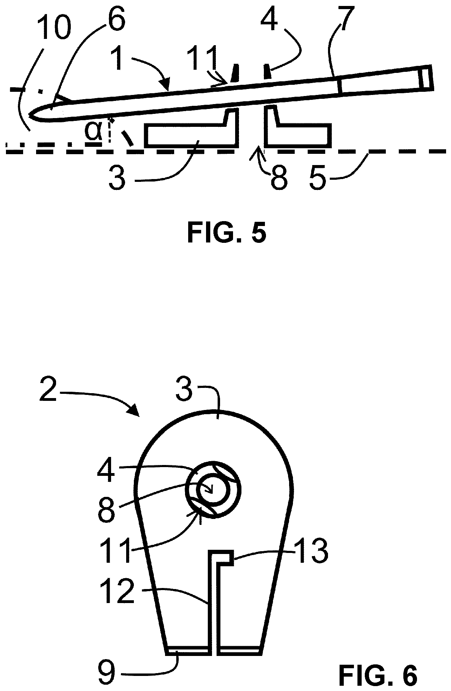

Wie in der Figur 5 gezeigt wird, kann durch den Durchgang 11 ein Ende 6 des Thermometers 1 hindurchgesteckt werden. Der Durchgang 11 ist also eine Halteeinrichtung für das Thermometer 1. Das Thermometer 1 verläuft dann beispielsweise wie gezeigt nahezu horizontal und schließt mit einem waagerechten Untergrund 5 einen Winkel α von beispielsweise nicht mehr als 15° ein. Das Thermometer 1 kann sich dann von Anfang an relativ nah beim Untergrund 5 befinden. Das Thermometer 1 kann dann seitlich in eine Speise 10 hineingestochen werden. Das Thermometer 1 benötigt nun keine weitere Abstützung, um die gezeigte Position behalten zu können, weil das Thermometer im Wesentlichen waagerecht verläuft. Das Thermometer 1 befindet sich in einer Position, die geeignet ist, um Temperaturen von relativ dünnen Speisen 10 unabhängig von ihrer Konsistenz unmittelbar messen zu können.

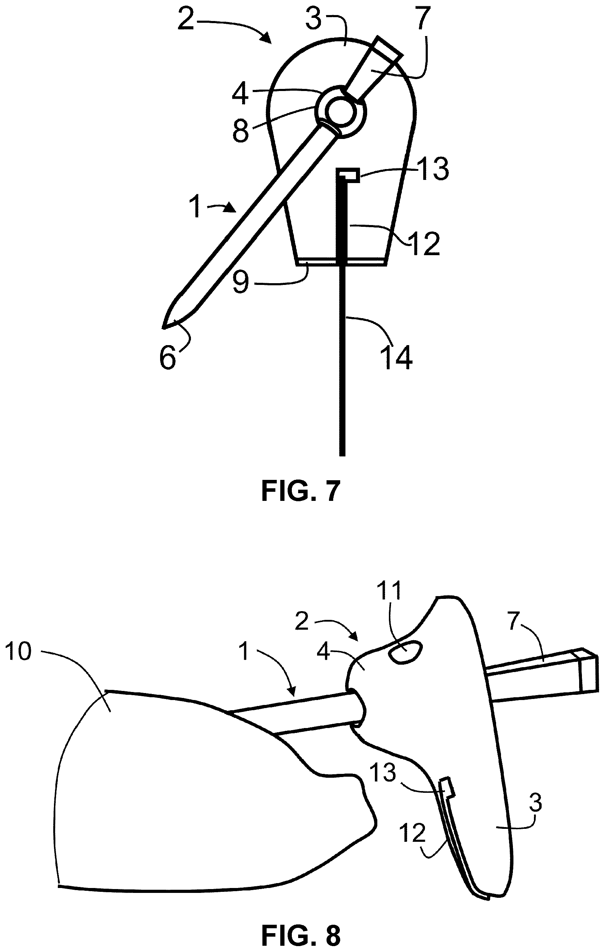

Die Figur 6 zeigt eine Aufsicht auf die Halterung 2. Der Fuß 3 steht vom Hals 4 so weit ab, dass jeweils ein Finger auf den Fuß 3 links und rechts neben dem Hals 4 aufgelegt werden kann. Die Halterung 2 kann dadurch gut ergriffen werden, um beispielsweise ein Thermometer leicht aus einer Speise 10 herausziehen zu können. Der Fuß 3 kann mit einem Schlitz 12 versehen sein, der ein offenes Ende bei der Stützfläche 9 aufweist. Das andere Ende des Schlitzes 12 kann eine Verbreiterung 13 aufweisen. Schlitz 12 und Verbreiterung 13 können wie gezeigt L-förmig sein. Dadurch kann der in der Figur 6 gezeigte rechte Schenkel neben dem Schlitz 12 leichter elastisch gebogen werden als der links gezeigte Schenkel, wenn die Halterung 2 aus einem elastisch biegsamen Material besteht. Es kann dann eine in der Figur 7 gezeigte Gefäßwand 14 so in den Schlitz hineingesteckt werden, dass die Halterung durch Klemmwirkung am Gefäß befestigt ist. Die Klemmwirkung wird durch die Verbreiterung 13 unterstützt, da diese ein Aufspreizen der Schenkel erleichtert. Die Halterung 2 kann durch Klemmwirkung mit der Gefäßwand 14 rutschfest verbunden sein. Ein Thermometer 1 kann dann so durch den Durchgang 11 hindurchgesteckt worden sein, dass das Thermometer 1 in das Gefäß, das die Gefäßwand 14 umfasst, hineinreicht. Die Figur 7 verdeutlicht, dass dann das Thermometer 1 mit der Innenwand 14 einen Winkel von ca. 40° bis 50° einschließen kann. Eine Temperatur im oberen Bereich des Gefäßes mit der Gefäßwand 14 kann nun gemessen werden.

In der Figur 8 wird eine zweite, dreidimensional gezeigte Ausführungsform einer Halterung 2 sowie ein von der Halterung gehaltenes Thermometer 1 gezeigt. Die gezeigte in der Figur 8 gezeigte Situation entspricht der Situation aus der Figur 3. Der Vergleich der Figur 8 mit der Figur 3 verdeutlicht, dass das Thermometer 1 auch nahezu waagerecht beispielsweise in ein Fleischstück 10 hineingesteckt werden kann. Das Ende mit dem Schlitz 12 des Fußes 3 kann dennoch auf einem Untergrund zur Stabilisierung abgestellt sein. Dafür ist keine ebene Abstützfläche erforderlich. Es kann ein Aufstellen der Enden der beiden Schenkel genügen, die durch den Schlitz 12 voneinander getrennt sind, wie dies in der Figur 8 angedeutet wird. Da die beiden Enden einen Abstand zueinander aufweisen, können diese die Lage des Thermometers 1 gut stabilisieren.

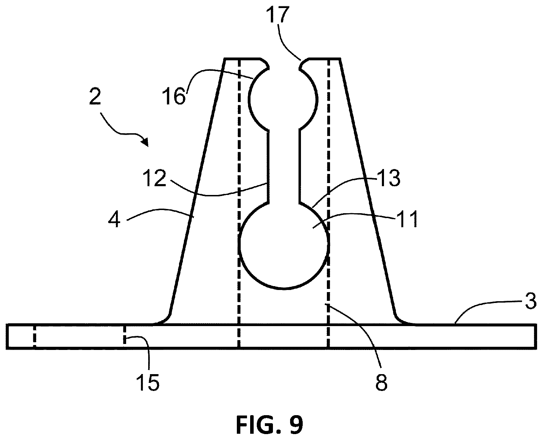

Die Figur 9 zeigt schematisch eine seitliche Ansicht auf eine dritte Ausführungsform einer Halterung 2 für ein Halten eines Speisenthermometers 1. Die beispielsweise aus einem Elastomer bestehende Halterung 2 kann wiederum einen Fuß 3 und einen Hals 4 umfassen. Steht der Fuß 3 auf einem waagerechten Untergrund 5, dann steht der Hals 4 nach oben von dem Fuß 3 vorzugsweise senkrecht ab. Der Fuß 3 kann in Aufsicht gesehen kreisrund sein. Der Fuß 3 kann in Aufsicht gesehen vieleckig sein. Der Fuß 3 kann in Aufsicht gesehen beispielsweise quadratisch sein.

Auch bei der dritten Ausführungsform kann die Breite bzw. ggfs. der Durchmesser des Fußes 3 größer als die Höhe der Halterung 2 sein. Vom Hals 4 aus gesehen kann der Fuß 3 auch bei dieser dritten Ausführungsform nach links und nach rechts gleich weit abstehen. Der Hals 4 kann also auf dem Fuß 3 mittig angeordnet sein. Es kann einen durch gestrichelte Linien angedeuteten Durchgang 8 geben, der in der in der Figur 9 gezeigten Ansicht durch die Mitte des Fußes 3 hindurchführen kann. Der Durchmesser des Durchgangs 8 kann so sein, dass der Griff 7 eines Thermometers 1 nicht oder nicht vollständig durch den Durchgang 8 hindurchgeschoben werden kann. Ein zum Beispiel spitzes Ende 6 eines Thermometers 1 kann in den Durchgang 8 hineingesteckt und auch hindurch gesteckt werden. Der Griff 7 kann dann als Anschlag dienen, um zu verhindern, dass das Thermometer 1 vollständig durch den Durchgang 8 hindurchgeschoben werden kann.

Wie in der Figur 9 gezeigt wird, kann ein Durchgang 11 durch den Hals 4 hindurchführen. Ein zum Beispiel spitzes Ende 6 eines Thermometers 1 kann durch den Durchgang 11 hindurchgesteckt werden. Im Anschluss daran kann das Thermometer 1 waagerecht oder zumindest näherungsweise waagerecht durch die Halterung 2 gehalten werden, wenn die Halterung 2 wie in der Figur 9 gezeigt aufgestellt ist. Der Griff 7 eines Thermometers 1 kann dann wiederum als Anschlag dienen, der verhindern kann, dass ein Thermometer 1 vollständig durch den Durchgang 11 hindurchgeschoben werden kann.

Durch den Fuß 3 kann ein Durchgang 15 hindurchführen, der ebenfalls als Halteeinrichtung für ein Thermometer 1 dient. Dieser Halteeinrichtung 15 soll ein Thermometer 1 insbesondere dann halten, wenn der Schlitz 12 mit einer Gefäßwand verbunden ist. Ein zum Beispiel spitzes Ende 6 eines Thermometers 1 kann durch den Durchgang 15 hindurch gesteckt werden. Der Griff 7 kann dann als Anschlag dienen, um zu verhindern, dass das Thermometer 1 vollständig durch den Durchgang 15 hindurchgeschoben werden kann.

Die dritte Ausführungsform der Halterung 2 kann einen Schlitz 12 umfassen. Der Schlitz 12 dient wiederum einer Befestigung der Halterung 2 an einer Gefäßwand. Der Schlitz 12 kann, wie in der Figur 9 gezeigt, von oben in den Hals 4 hineinführen. Der Schlitz 12 umfasst dann ein offenes Ende bei der Oberseite des Halses 4.

Der Schlitz 12 kann nahe bei seiner Eingangsöffnung 17 einen Durchgang 16 aufweisen. Der Durchmesser des Durchgangs 16 kann geringer als der Durchmesser der drei anderen Durchgänge 8, 11 und 15 sein. Wird eine Spitze bzw. ein spitzes Ende 6 eines Thermometers 1 in den Durchgang 16 hineingeschoben, so werden die beiden Schenkel des Schlitzes 12 auseinandergebogen. Ein Thermometer 1 wird dann klemmend gehalten. Der Durchgang 16 wirkt dann zusammen mit den Schenkeln des Schlitzes 12 wie eine Klammer. Alternativ kann ein Thermometer 1 von oben durch die Eingangsöffnung 17 hindurchgedrückt werden, bis das Thermometer 1 im Bereich des Durchgangs 16 klammerartig gehalten wird.

Die Durchgänge 11 und/oder 16 können so geneigt sein, dass ein Thermometer 1 durch den jeweiligen Durchgang 11, 16 nicht waagerecht gehalten wird, sondern schräg in Richtung Untergrund verläuft. Dies gilt dann, wenn die Halterung 2 wie in der Figur 9 gezeigt aufgestellt ist. Die Durchgänge 11 und/oder 16 können waagerecht verlaufen, wenn die Halterung 2 auf einem waagerechten Untergrund abgestellt ist. Die Durchgänge 11 und/oder 16 können dann also parallel zum Untergrund verlaufen.

Der Schlitz 12 kann eine sich nach außen aufweitende Eingangsöffnung 17 aufweisen, um beispielsweise das Hineinschieben einer Gefäßwand in den Schlitz 12 zu erleichtern.

Der Durchgang 11 kann eine Doppelfunktion erfüllen, wenn er, wie in der Figur 9 gezeigt, als kreisförmige Verbreiterung 13 für den Schlitz 12 dient. Der Durchgang 11 bildet dann einen verbreiterten Grund des Schlitzes 12.

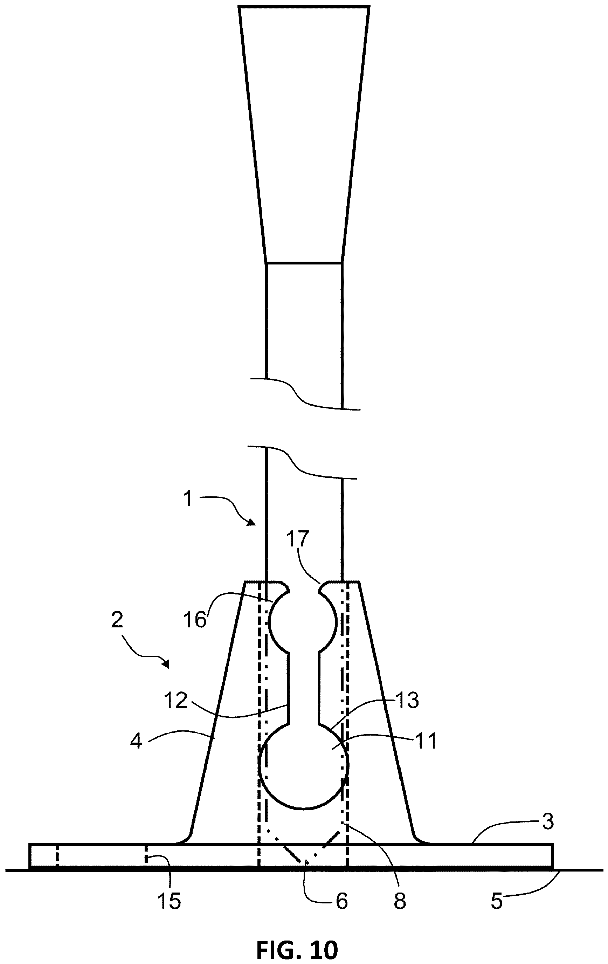

Die Figur 10 zeigt die Halterung 2 aus der Figur 9. Die Halterung 2 ist mit ihrem Fuß 3 auf einem waagerechten Untergrund 5 aufgestellt. Ein Thermometer 1 ist mit seiner Spitze 6, also seinem spitzen Ende, in den Durchgang 8 hineingesteckt. Der Untergrund 5 verhindert, dass die Spitze 6 durch den Durchgang 8 hindurchgesteckt werden kann. Das Thermometer 1 erstreckt sich senkrecht in die Höhe. Das Thermometer 1 befindet sich in einer Parkposition. Es kann in der Parkposition zusammen mit der Halterung 2 platzsparend in einem Schrank untergebracht werden. Das Thermometer 1 kann zusammen mit der Halterung 2 platzsparend nahe bei einem Kochfeld platziert werden und auf diese Weise zusammen mit der Halterung 2 griffbereit während eines Kochvorgangs zur Verfügung stehen.

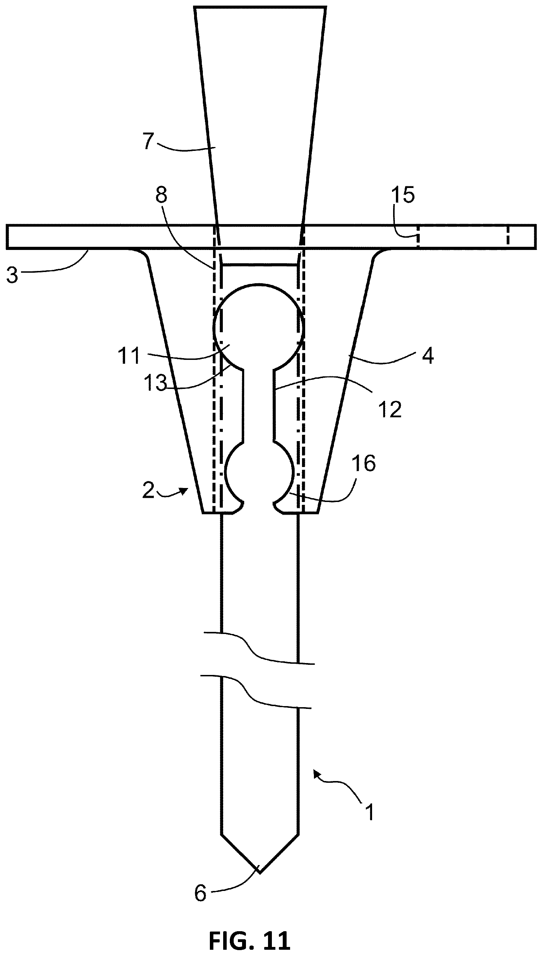

Die Figur 11 zeigt die Halterung 2 aus den Figuren 9 und 10. Im Vergleich zur Figur 10 ist die Spitze 6 des Thermometers 1 in umgekehrter Richtung zunächst in den Durchgang 8 hineingesteckt worden. Anschließend ist die Spitze 6 und damit das Thermometer 1 weiter durch den Durchgang 8 hindurchgesteckt worden und zwar bis zum Griff 7. Da der Griff 7 sich konisch zum Ende hin verbreitert, wirkt dieser als Anschlag und kann im Durchgang 8 reibschlüssig gehalten sein. Die Halterung 2 dient nun ergänzend als wärmeisolierender Griff für das Thermometer 1, wenn die Halterung 2 aus einem wärmeisolierenden Material wie zum Beispiel Kunststoff besteht. Der Kunststoff ist vorzugsweise elastisch, damit der Griff 7 zum Teil so in den Durchgang 8 hineingeschoben werden kann, dass der Griff 7 kraftschlüssig im Durchgang 8 gehalten wird. Alternativ oder ergänzend kann der Griff 7 aus einem elastischen Material bestehen, damit eine reibschlüssige Verbindung zu einem Durchgang hergestellt werden kann. Insbesondere kann der Fuß 3 der Halterung 2 mit Fingern einer Hand umgriffen und daher dazu benutzt werden, um das Thermometer 1 leicht aus einer Speise herausziehen zu können.

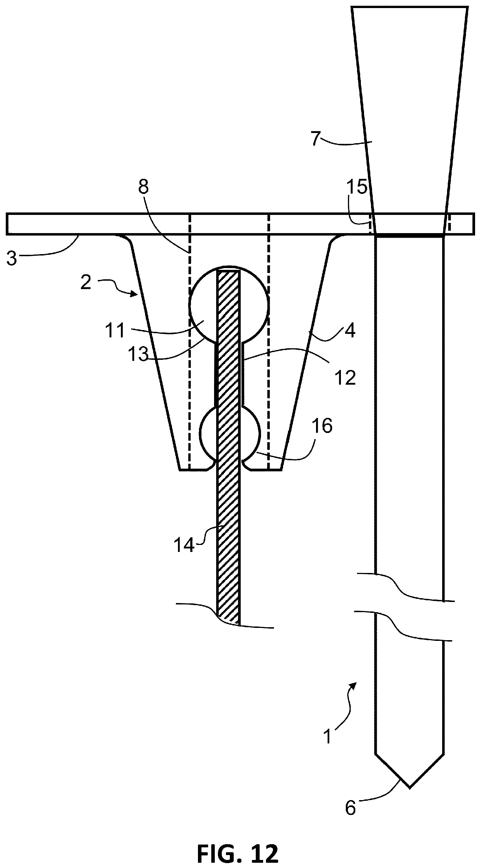

Die Figur 12 zeigt die Halterung 2 aus den Figuren 9 bis 11, die an einer im Schnitt gezeigten Gefäßwand 14 befestigt ist. Die Gefäßwand 14 ist dafür in den Schlitz 12 der Halterung 2 hineingeschoben. Die Spitze 6 des Thermometers 1 ist durch den Durchgang 15 im Fuß 3 der der Halterung 2 hindurch gesteckt worden. Der verbreiterte Griff 7 des Thermometers 1 verhindert ein Durchrutschen des Thermometers 1 durch den Durchgang 15 hindurch. Die Spitze 6 reicht nun in das Gefäß mit der Gefäßwand 14 hinein. Das Thermometer 1 kann daher die Innentemperatur in einem Kochgefäß bzw. Speisenzubereitungsgefäß mit der Gefäßwand 14 messen. Das Thermometer 1 kann auch in eine Speise hineinreichen, die sich in dem Kochgefäß bzw. Speisenzubereitungsgefäß mit der Gefäßwand 14 befindet.

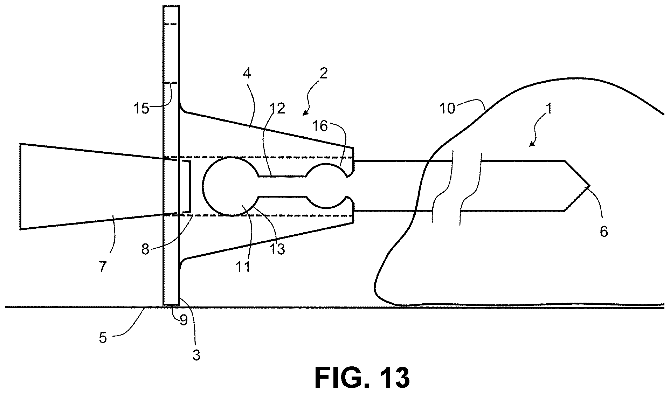

Die Figur 13 zeigt eine Temperaturmessung einer Speise 10 mithilfe eines Thermometers 1 und einer Halterung 2. Die in der Figur 13 gezeigte Halterung 2 weist im Unterschied zu den in den Figuren 9 bis 12 gezeigten Halterungen 2 seitlich eine geradlinig verlaufende Stützfläche 9 auf. Ist das die Spitze 6 des Thermometers 1 durch den Durchgang 8 hindurchgesteckt und in eine Speise 10 hineingesteckt, so kann die Halterung 2 auf der Stützfläche 9 abgestellt sein. Das Abstellen der Halterung 2 auf der Stützfläche 9 stabilisiert die Position des Thermometers 1 während der Temperaturmessung, da der geradlinige Verlauf der Stützfläche 9 geradlinig auf einem Untergrund aufliegen kann. Die Stützfläche 9 kann aber auch konkav gewölbt sein. Die beiden Enden der konkaven Wölbung können dann auf einem Untergrund aufstehen und so die Position des Thermometers 1 stabilisieren.

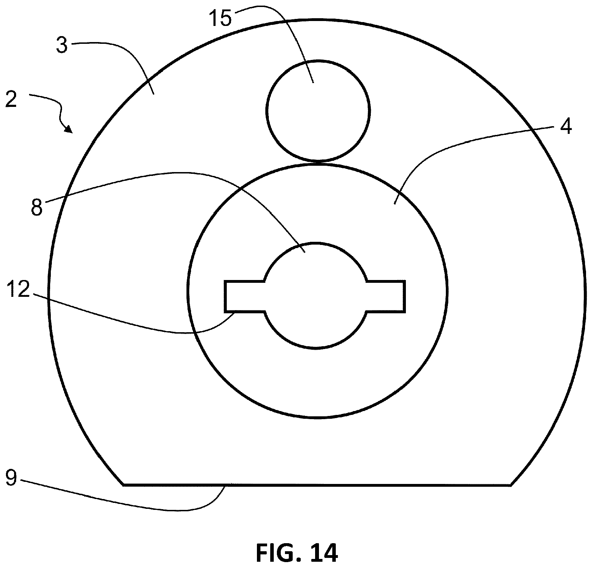

Die Figur 14 zeigt schematisch eine Aufsicht auf die Halterung 2 aus der Figur 13. Die Figur 14 verdeutlicht, dass in Aufsicht gesehen der Fuß 3 nicht kreisrund ist, weil seitlich eine geradlinig verlaufende Stützfläche 9 vorhanden ist. Die Stützfläche 9 sorgt für eine Abweichung von einer Kreisform. Die Stützfläche 9 muss nicht eben sein, um stabilisierend wirken zu können. Für eine Stabilisierung ist nur wichtig, dass die Stützfläche 9 in Aufsicht gesehen geradlinig verläuft, wie dies in der Figur 14 gezeigt wird. Ansonsten kann die Stützfläche 9 zum Beispiel gleichmäßig bogenförmig verlaufen, wie dies bei einem Zylinder der Fall ist.

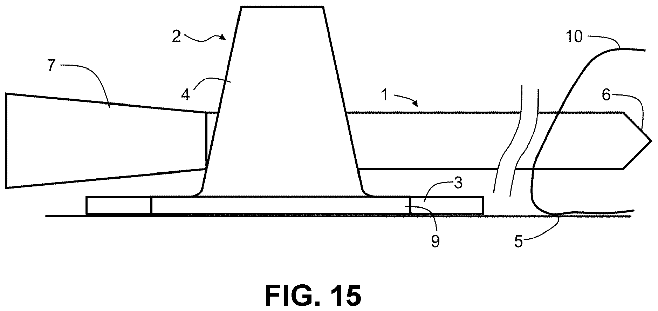

Die Figur 15 zeigt schematisch die Halterung 2 und das Thermometer 1 aus den Figuren 13 und 14. Die Spitze 6 des Thermometers 1 ist durch den Durchgang 11 hindurchgesteckt und in eine Speise 10 hineingesteckt.

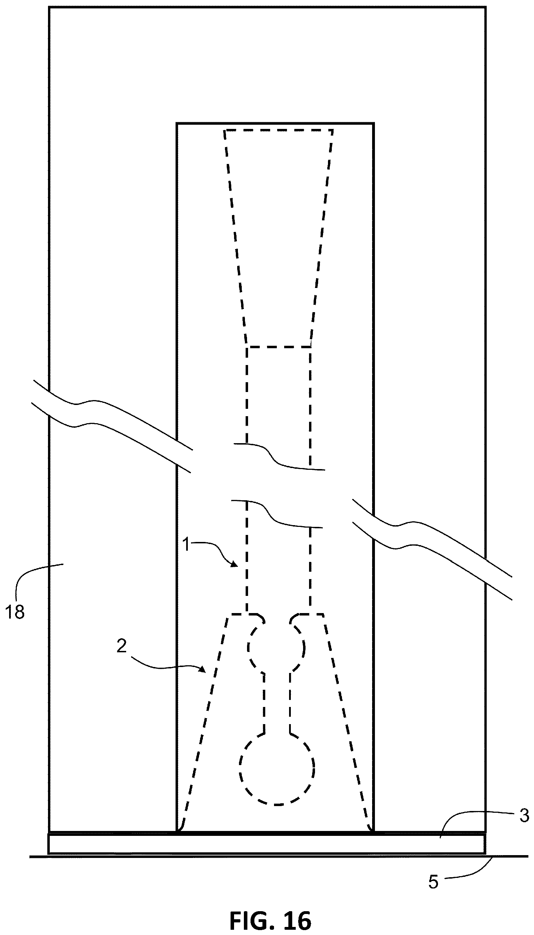

Das in der Figur 16 gezeigte erfindungsgemäße System umfasst einen Behälter 18. Der Behälter 18 kann zylinderförmig sein. Der Behälter 18 kann an einer Stirnseite geschlossen sein, wie dies auf der Oberseite in der Figur 16 gezeigt wird. Die Halterung 2 ist erfindungsgemäß so an die Behälteröffnung angepasst, dass die Halterung 2 eine Verschlusskappe für den Behälter 18 sein kann. Erfindungsgemäß ist das Thermometer 1 dann im Behälter. Der Behälter 18 kann so das im Behälter 18 untergebrachte Thermometer 1 vor äußeren Einwirkungen schützen. Das System mit dem Behälter 18 kann platzsparend und geschützt untergebracht werden.

Sämtliche in den Figuren gezeigten Halterungen 2 können als Verschlusskappe dienen. Besonders geeignet sind jedoch die in den Figuren 9 bis 15 gezeigten Ausführungsformen der Halterungen 2.

Der Behälter 18 kann in einer Ausgestaltung die Batterie des Thermometers induktiv wieder aufladen. Der Behälter 18 umfasst in diesem Fall eine Ladeelektronik, die für ein induktives Laden eingerichtet ist. Der Behälter 18 kann in einer Ausgestaltung eine Batterie umfassen, um zum Beispiel die Batterie des Thermometers 1 aufladen zu können. Eine Batterie des Behälters 18 kann alternativ oder ergänzend dazu dienen, eine eigene Elektronik mit Strom zu versorgen. Der Behälter 18 kann in einer Ausgestaltung an eine externe Stromquelle angeschlossen werden, um die Batterie des Thermometers 1 und/oder gegebenenfalls die Batterie des Behälters 18 aufladen zu können. In einer Ausgestaltung kann die Batterie aus dem Behälter 18 entnommen werden, um beispielsweise die Batterie danach aufladen zu können.

Der Behälter 18 kann in einer Ausgestaltung eine drahtlose Sende- und/oder Empfangseinheit umfassen, um Daten an das Thermometer 1 drahtlos senden zu können bzw. um Daten von dem Thermometer 1 drahtlos empfangen zu können. Der Behälter 18 kann in einer Ausgestaltung ein Display umfassen, auf dem eine gemessene Temperatur des Thermometers 1 angezeigt werden kann. Eine drahtlose Sende- und/oder Empfangseinheit des Behälters 18 kann so ausgestaltet sein, dass diese nur über kurze Distanzen Daten von dem Thermometer 1 empfangen kann und diese über längere Distanzen an ein externes Steuergerät wie zum Beispiel eine Küchenmaschine senden kann. Auf diese Weise kann der Behälter 18 beispielsweise über Bluetooth Daten mit dem Thermometer 1 austauschen oder zumindest von dem Thermometer Daten empfangen. Beispielsweise über WLAN kann dann der Behälter 18 mit der Küchenmaschine Daten austauschen. Der Behälter 18 kann also als Schnittstelle dienen, um den Energieverbrauch des Thermometers 1 während des Betriebs zu minimieren. Die Küchenmaschine kann dann so eingerichtet sein, dass über die Küchenmaschine ein Speisenzubereitungsgerät gesteuert wird, in dem das Thermometer 1 Temperaturen misst. Der Behälter 18 kann aber auch beispielsweise nur über Bluetooth oder nur über WLAN Daten empfangen und versenden, um eine Schnittstelle sein zu können. Der Behälter 18 kann über eine Recheneinrichtung verfügen, um Rechenaufgaben zu übernehmen und um das Thermometer dadurch von Rechenaufgaben zu entlasten. Es ist von Vorteil, den Behälter 18 für Rechenaufgaben und nicht das Thermometer zu nutzen, um den Energieverbrauch des Thermometers zu minimieren. Der Behälter 18 kann nämlich beispielsweise unproblematisch über eine vergleichsweise große eigene Batterie verfügen und/oder beispielsweise unproblematisch an eine externe Stromquelle angeschlossen werden.

Es sind auch andere Ausführungsformen einer Halterung 2 möglich. Beispielsweise kann sich eine weitere Ausführungsform von der der in der Figur 9 gezeigten dritten Ausführungsform unterscheiden, weil der durch den Hals 4 hindurchführende Durchgang 16 nicht vorhanden ist.

Es kann neben dem Durchgang 15 und dem Durchgang 8 einen dritten Durchgang geben, der durch den Fuß 3 hindurchführt. Es ist dann aus Platzgründen von Vorteil, dass der Durchgang 15 und der dritte Durchgang so angeordnet sind, dass sich der in der Figur 14 gezeigte Durchgang 8 zwischen den anderen beiden Durchgängen befindet. Die drei Durchgänge können also entlang einer geraden Linie angeordnet sein.

Es ist bei drei Durchgängen, die durch den Fuß 3 hindurchführen, aus Platzgründen zweckmäßig, dass der Durchgang 15 nicht wie in der Figur 14 gezeigt der Stützfläche 9 gegenüberliegend beim Außenumfang angeordnet ist. Stattdessen ist es dann von Vorteil, dass die drei Durchgänge entlang einer gedachten geraden Linie angeordnet sind, die parallel zu der in der Figur 14 gezeigten Stützfläche 9 verläuft. Der Durchgang 15 befindet sich dann beispielsweise links von dem in der Figur 14 gezeigten Durchgang 8 und der dritte Durchgang rechts von dem in der Figur 14 gezeigten Durchgang 8.

Es können auch mehr als drei Durchgänge durch den Fuß 3 hindurchführen, also zum Beispiel vier Durchgänge. Es können nur zwei Durchgänge beim Außenumfang des Fußes vorhanden sein. Zwischen den beiden dann außen liegenden Durchgängen kann sich ein Sackloch befinden, in das das Speisenthermometer hineingesteckt werden kann. Das Sackloch kann beim Grund des Fußes enden und dazu dienen, das Speisenthermometer 1 wie in den Figuren 1,2 und 10 gezeigt senkrecht aufstellen zu können, wenn die Aufstellfläche des Fußes 3 auf einem ebenen Untergrund abgestellt ist. Das Spesenthermometer kann dann also nicht durch den Fuß 3 hindurchgeschoben werden, weil das Sackloch beim Fuß 3 geschlossen ist.

Der in der Figur 14 gezeigte Schlitz 12 muss nicht von rechts nach links und damit parallel zur Stützfläche 9 verlaufen. Stattdessen kann es zweckmäßig sein, dass der in der Figur 14 gezeigte Schlitz 12 von oben nach unten verläuft und damit senkrecht zur in der Figur 14 gezeigten Stützfläche 9. Dieser Verlauf des Schlitzes 12 ist beispielsweise dann zu bevorzugen, wenn wie zuvor beschrieben drei Durchgänge vorhanden sind, die entlang der genannten gedachten geraden Linie angeordnet sind. Anstelle von drei Durchgängen können zwei Durchgänge und ein Sackloch vorhanden sein, die entlang einer Linie angeordnet sind.

Gibt es zusätzlich zu dem in der Figur 14 gezeigten Durchgang 8 oder zusätzlich zu dem Sackloch, das den Durchgang 8 ersetzt, zwei weitere Durchgänge, also den Durchgang 15 und einen dritten Durchgang, dann ist von Vorteil, dass die drei Durchgänge ein Speisenthermometer 1 auf drei verschiedenen Arten halten können. Wird ein Speisenthermometer 1 durch den mittleren Durchgang 8 gehalten, dann erstreckt sich das Speisenthermometer 1 beispielsweise wie in der Figur 13 gezeigt parallel zur Erstreckungsrichtung des Halses 4 und damit senkrecht zur Aufstellfläche des Fußes 3. Wird ein Speisenthermometer 1 durch den zweiten Durchgang 15 gehalten, dann schließt das Speisenthermometer 1 beispielsweise einen ersten spitzen Winkel mit der Erstreckungsrichtung des Halses 4 ein und weicht damit von dem ab, was in der Figur 12 gezeigt wird. Das Speisenthermometer 1 verläuft dann also nicht parallel zur Erstreckungsrichtung des Halses 4, wie dies in der Figur 12 gezeigt wird. Wird ein Speisenthermometer 1 durch den dritten Durchgang gehalten, dann schließt das Speisenthermometer 1 beispielsweise einen zweiten spitzen Winkel mit der Erstreckungsrichtung des Halses 4 ein. Der zweite spitze Winkel ist dann beispielsweise größer als der erste spitze Winkel.

Durch den Fuß kann auch nur ein Durchgang hindurchführen und zusätzlich ein Sackloch für ein senkrechtes Aufstellen vorhanden sein. Der Durchgang ist dann vorzugsweise so ausgerichtet, dass das Thermometer durch den Durchgang nicht senkrecht zur Aufstellfläche des Fußes 3 verläuft.

In der Figur 14 werden Durchgänge mit rundem Querschnitt gezeigt. Es ist aber auch möglich, dass ein oder mehrere Durchgänge einen eckigen Querschnitt aufweisen. Beispielsweise können sämtlich drei genannten Durchgänge einen quadratischen Querschnitt aufweisen. Dies ist insbesondere dann zu bevorzugen, wenn der Griff 7 ebenfalls einen quadratischen Querschnitt so aufweist, dass der Griff drehfest durch einen jeden Durchgang gehalten werden kann und zwar vorzugsweise klemmend gehalten werden kann. Das Speisenthermometer 1 kann darüber hinaus einen anderen Querschnitt aufweisen, so zum Beispiel einen kreisrunden Querschnitt.

Der Querschnitt des Griffs 7 wird zum angrenzenden Ende des Speisenthermometers 1 hin vorzugsweise kontinuierlich größer, so dass der Griff nur zum Teil in einen Durchgang hineingesteckt werden kann. Der Durchgang 15 und/oder der genannte dritte Durchgang können so sein, dass ein Speisenthermometer 1, das in einen der beiden Durchgänge hineingesteckt worden ist, um mehr als 5°, vorzugsweise um mehr als 10°, verschwenkt werden kann und eine solche Schwenkbewegung nicht mehr möglich ist, wenn der sich Griff 7 in maximal möglicher Weise in einen genannten Durchgang hineingesteckt worden ist. Um dies zu erreichen, kann ein Durchgang an einer Seite beispielsweise einen quadratischen oder kreisrunden Querschnitt aufweisen, der zur anderen Seite hin zunehmend länglicher wird. Beispielsweise kann der Querschnitt des Durchgangs dann auf der anderen Seite rechteckig oder ein anders geformtes Langloch sein. Dadurch werden die Einsatzmöglichkeiten weiter gesteigert.

Die Halterung 2 und/oder der Griff 7 können aus einem temperaturbeständigen Kunststoff bestehen. Vorzugsweise ist der Kunststoff so ausgewählt, dass dieser üblichen maximalen Backofentemperaturen von bis wenigstens 200 °C oder bis wenigstens 220 °C ausgesetzt werden kann.

## Patentansprüche

1. System mit einem Speisenthermometer (1) und einer Halterung (2) für ein Halten des Speisenthermometers (1), wobei die Halterung (2) zwei verschiedene Halteeinrichtungen (8, 11, 15, 16) umfasst, durch die das Speisenthermometer (1) in zwei verschiedenen Haltepositionen gehalten werden kann, **dadurch gekennzeichnet, dass** das System einen Behälter (18) umfasst und die Halterung (2) so an die Behälteröffnung angepasst ist, dass die Halterung (2) eine Verschlusskappe für den Behälter (18) sein kann, wenn sich das Speisenthermometer (1) im Behälter (18) befindet, wobei die Halterung (2) einen Fuß (3) und einen Hals (4) umfasst, der von dem Fuß (3) absteht, wobei eine Halteeinrichtung ein durch den Fuß (3) hindurchführender Durchgang (8) oder ein Sackloch ist, der beim Grund des Fußes (3) endet, wobei das System so eingerichtet ist, dass die Halterung (2) so an die Behälteröffnung angepasst ist, dass der Fuß (3) der Halterung (2) eine Verschlusskappe für den Behälter (18) sein kann, wenn sich das Speisenthermometer (1) im Behälter (18) befindet, wobei der Hals (4) sich dann im Behälter (18) befindet, und dass das Speisethermometer (1) in den Durchgang (8) bzw. in das Sackloch hineingesteckt ist, wenn sich das Speisenthermometer (1) im Behälter (18) befindet und der Fuß (3) den Behälter verschließt .

2. System nach dem vorhergehenden Anspruch, **dadurch gekennzeichnet, dass** eine Halteeinrichtung ein Durchgang (8, 11, 15) ist, durch das ein Ende (6) des Speisenthermometers (1) für ein Halten hindurch gesteckt werden kann.

3. System nach einem der vorhergehenden Ansprüche, **dadurch gekennzeichnet, dass** die Halterung (2) den Fuß (3) für ein Aufstellen der Halterung (2) auf einem Untergrund (5) umfasst.

4. System nach dem vorhergehenden Anspruch, **dadurch gekennzeichnet, dass** eine Halteeinrichtung (8) das Speisenthermometer (1) senkrecht oder zumindest im Wesentlichen senkrecht halten kann, wenn die Halterung (2) durch den Fuß (3) auf einem waagerechten Untergrund (5) aufgestellt ist.

5. System einem der zwei vorhergehenden Ansprüche, **dadurch gekennzeichnet, dass** eine Halteeinrichtung (11, 16) das Speisenthermometer (1) waagerecht oder zumindest im Wesentlichen waagerecht halten kann, wenn der Fuß (3) auf einem waagerechten Untergrund steht.

6. System nach dem vorhergehenden Anspruch, **dadurch gekennzeichnet, dass** das Speisenthermometer (1) mit einer Waagerechten einen Winkel von weniger als 20°, vorzugsweise von weniger als 15°, einschließt, wenn das Speisenthermometer (1) durch die Halteeinrichtung (11, 16) im Wesentlichen waagerecht gehalten wird.

7. System nach einem der vier vorhergehenden Ansprüche, **dadurch gekennzeichnet, dass** die Länge und/oder die Breite des Fußes (3) größer als die Höhe der Halterung (2) ist.

8. System nach einem der fünf vorhergehenden Ansprüche, **dadurch gekennzeichnet, dass** der Fuß (3) seitlich eine Stützfläche (9) umfasst.

9. System nach einem der vorhergehenden Ansprüche, **dadurch gekennzeichnet, dass** die Halterung (2) eine weitere Halteeinrichtung (12) umfasst, mit der die Halterung (2) an einer Wand (14) eines Speisengefäßes befestigt werden kann.

10. System nach dem vorhergehenden Anspruch, **dadurch gekennzeichnet, dass** die weitere Halteeinrichtung einen Schlitz (12) mit einem offenen Ende umfasst.

11. System nach dem vorhergehenden Anspruch, **dadurch gekennzeichnet, dass** der Schlitz (12) an dem Ende (13) verbreitert ist, das dem offenen Ende gegenüberliegt.

12. System nach einem der drei vorhergehenden Ansprüche, **dadurch gekennzeichnet, dass** das Speisenthermometer (1) mit einer Wand (14) eines Speisengefäßes einen Winkel von 30° bis 60° einschließt, wenn die Halterung (2) durch die weitere Halteeinrichtung (12) an der Wand (14) des Speisengefäßes befestigt ist und das Speisenthermometer (1) durch eine Halteeinrichtung (15) gehalten wird.

13. System nach einem der vorhergehenden Ansprüche, **dadurch gekennzeichnet, dass** die Halterung (2) den Fuß (3) für ein Aufstellen der Halterung (2), zwei Durchgänge (8, 11, 15, 16) für ein Halten des Speisenthermometers (1) und einen Schlitz (12) umfassend ein offenes Ende für ein Befestigen der Halterung (2) an einer Wand (14) eines Speisengefäßes umfasst.

14. System nach dem vorhergehenden Anspruch, **dadurch gekennzeichnet, dass** die Halterung (2) einstückig gefertigt ist und aus Kunststoff besteht.

## Claims

1. System comprising a food thermometer (1) and a holder (2) for holding the food thermometer (1), wherein the holder (2) comprises two different holding means (8, 11, 15, 16) by which the food thermometer (1) can be held in two different holding positions, **characterized in that** the system comprises a container (18) and the holder (2) is adapted to the container opening such that the holder (2) can be a closure cap for the container (18) when the food thermometer (1) is located in the container (18), wherein the holder (2) comprises a foot (3) and a neck (4) projecting from the foot (3), wherein a holding means is a passage (8) passing through the foot (3) or a blind hole ending at the base of the foot, wherein the system is configured such that the holder (2) is adapted to the container opening such that the foot (3) of the holder (2) can be a closure cap for the container (18) when the food thermometer (1) is located in the container (18), the neck (4) then being located in the container (18), and that the food thermometer (1) is inserted into the passage (8) or into the blind hole, respectively, when the food thermometer (1) is located in the container (18) and the foot (3) closes the container (18).

2. System according to the preceding claim, **characterized in that** one holding means is a passage (8, 11, 15) through which an end (6) of the food thermometer (1) can be inserted for holding.

3. System according to one of the preceding claims, **characterized in that** the holder (2) comprises the foot (3) for placing the holder (2) on a base (5).

4. System according to the preceding claim, **characterized in that** a holding means (8) can hold the food thermometer (1) vertically or at least substantially vertically when the holder (2) is placed on a horizontal base (5) by the foot (3).

5. System of one of the two preceding claims, **characterized in that** a holding means (11, 16) can hold the food thermometer (1) horizontally or at least substantially horizontally when the foot (3) is placed on a horizontal base.

6. System according to the preceding claim, **characterized in that** the food thermometer (1) encloses an angle of less than 20°, preferably less than 15°, with a horizontal line when the food thermometer (1) is held substantially horizontally by the holding means (11, 16).

7. System according to one of the four preceding claims, **characterized in that** the length and/or the width of the foot (3) is greater than the height of the holder (2).

8. System according to one of the five preceding claims, **characterized in that** the foot (3) comprises a support surface (9) on the side.

9. System according to one of the preceding claims, **characterized in that** the holder (2) comprises a further holding means (12) with which the holder (2) can be fixed to a wall (14) of a food vessel.

10. System according to the preceding claim, **characterized in that** the further holding means comprises a slot (12) with an open end.

11. System according to the preceding claim, **characterized in that** the slot (12) is widened at the end (13) which is opposite to the open end.

12. System according to one of the three preceding claims, **characterized in that** the food thermometer (1) encloses an angle of 30° to 60° with a wall (14) of a food vessel when the holder (2) is fixed to the wall (14) of the food vessel by the further holding means (12) and the food thermometer (1) is held by a holding means (15).

13. System according to one of the preceding claims, **characterized in that** the holder (2) comprises the foot (3) for placing the holder (2), two passages (8, 11, 15, 16) for holding the food thermometer (1) and a slot (12) comprising an open end for fixing the holder (2) to a wall (14) of a food vessel.

14. System according to the preceding claim, **characterized in that** the holder (2) is manufactured in one piece and consists of plastic.

## Revendications

1. Système avec un thermomètre pour aliments (1) et un support (2) pour le maintien du thermomètre pour aliments (1), dans lequel le support (2) comprend deux dispositifs de maintien différents (8, 11, 15, 16) grâce auxquels le thermomètre pour aliments (1) peut être maintenu dans deux positions de maintien différentes, **caractérisé en ce que** le système comprend un récipient (18) et le support (2) est adapté à l'ouverture du récipient de telle sorte que le support (2) peut être un capuchon de fermeture pour le récipient (18) lorsque le thermomètre pour aliments (1) se trouve dans le récipient (18), dans lequel le support (2) comprend un pied (3) et un col (4) qui s'étend à partir du pied (3), dans lequel un moyen de maintien est un passage (8) traversant le pied (3) ou un trou borgne qui se termine à la base du pied (3), dans lequel le système est aménagé de telle sorte, que le support (2) est adapté à l'ouverture du récipient de telle sorte que le pied (3) du support (2) peut être un capuchon de fermeture du récipient (18) lorsque le thermomètre pour aliments (1) se trouve dans le récipient (18), dans lequel le col (4) se trouve alors dans le récipient (18), et de sorte que le thermomètre pour aliments (1) est inséré dans le passage (8) ou dans le trou borgne lorsque le thermomètre pour aliments (1) se trouve dans le récipient (18) et le pied (3) referme le récipient.

2. Système selon la revendication précédente, **caractérisé en ce qu'**un dispositif de maintien est un passage (8, 11, 15) à travers lequel une extrémité (6) du thermomètre pour aliments (1) peut être passé pour un maintien.

3. Système selon l'une des revendications précédentes, **caractérisé en ce que** le support (2) comprend le pied (3) pour une mise en place du support (2) sur un fond (5).

4. Système selon la revendication précédente, **caractérisé en ce qu'**un dispositif de maintien (8) est apte à maintenir le thermomètre pour aliments (1) à la verticale ou au moins sensiblement à la verticale lorsque le support (2) est mis en place sur un fond horizontal (5) par le pied (3).

5. Système selon l'une des deux revendications précédentes, **caractérisé en ce qu'**un dispositif de maintien (11, 16) peut maintenir le thermomètre pouraliments (1) à l'horizontale ou au moins sensiblement à l'horizontale lorsque le pied (3) est mis en place sur un support horizontal.

6. Système selon la revendication précédente, **caractérisé en ce que** le thermomètre pour aliments (1) forme un angle inférieur à 20°, de préférence inférieur à 15°, avec une horizontale lorsque le thermomètre pour aliments (1) est maintenu sensiblement à l'horizontale par le dispositif de maintien (11, 16).

7. Système selon l'une des quatre revendications précédentes, **caractérisé en ce que** la longueur et/ou la largeur du pied (3) est supérieure à la hauteur du support (2).

8. Système selon l'une des cinq revendications précédentes, **caractérisé en ce que** le pied (3) comprend latéralement une surface d'appui (9).

9. Système selon l'une des revendications précédentes, **caractérisé en ce que** le support (2) comprend un autre dispositif de maintien (12) avec lequel le support (2) peut être fixé à une paroi (14) d'un récipient pour aliments.

10. Système selon la revendication précédente, **caractérisé en ce que** l'autre dispositif de maintien comprend une fente (12) avec une extrémité ouverte.

11. Système selon la revendication précédente, **caractérisé en ce que** la fente (12) est élargie à l'extrémité (13) qui est opposée à l'extrémité ouverte.

12. Système selon l'une des trois revendications précédentes, **caractérisé en ce que** le thermomètre pour aliments (1) forme un angle de 30° à 60° avec une paroi (14) d'un récipient pour aliments lorsque le support (2) est fixé à la paroi (14) du récipient pour aliments par l'autre moyen de maintien (12) et que le thermomètre pour aliments (1) est maintenu par un dispositif de maintien (15).

13. Système selon l'une des revendications précédentes, **caractérisé en ce que** le support (2) comprend le pied (3) pour une mise en place du support (2), deux passages pour un maintien du thermomètre pour aliments (1) et une fente (12) comprenant une extrémité ouverte pour une fixation du support (2) à une paroi (14) d'un récipient pour aliments.

14. Système selon la revendication précédente, **caractérisé en ce que** le support (2) est fabriqué d'une seule pièce et consiste de matière plastique.
